## Europäisches Patentamt
## European Patent Office
## Office européen des brevets

(11) Publication number: **0 098 002 B1**

(12) **EUROPEAN PATENT SPECIFICATION**

(45) Date of publication of patent specification: **26.10.88**

(51) Int. Cl.⁴: **H 02 K 7/09,** H 02 K 41/02, G 05 F 7/00

(21) Application number: **83200902.1**

(22) Date of filing: **20.06.83**

(54) **Magnetically suspended linear motor.**

(30) Priority: **30.06.82 US 393946**

(43) Date of publication of application:
**11.01.84 Bulletin 84/02**

(45) Publication of the grant of the patent:
**26.10.88 Bulletin 88/43**

(84) Designated Contracting States:
**DE FR GB**

(56) References cited:
**EP-A-0 054 617**
**EP-A-0 076 726**
**US-A-3 124 962**
**US-A-3 565 495**

**"Frictional devices under development" in "Mechanical Engineering", vol. 103, no. 4, April 1981, p. 57**

(73) Proprietor: **N.V. Philips' Gloeilampenfabrieken Groenewoudseweg 1 NL-5621 BA Eindhoven (NL)**

(72) Inventor: **Goldowsky, Michael Philip c/o INT. OCTROOIBUREAU B.V. Prof. Holstlaan 6 NL-5656 AA Eindhoven (NL)**

(74) Representative: **Melio, Jan Dirk et al INTERNATIONAAL OCTROOIBUREAU B.V. Prof. Holstlaan 6 NL-5656 AA Eindhoven (NL)**

Courier Press, Leamington Spa, England.

## Description

Background of the invention

The invention relates to a magnetically suspended linear motor comprising a housing and a shaft having a longitudinal axis which is mounted in the housing for longitudinal reciprocating motion along the axis, said shaft being subjected to at least one external load applied in a direction extending radially with respect to the axis and means connected to the housing or the shaft for generating a permanent magnetic field which extends radially with respect to the axis at a first axial position and means connected to the shaft or the housing for conducting an electric current in a path surrounding the axis, said path being situated within the permanent magnetic field, at least one set of three separate means connected to the housing for generating variable magnetic fields said means being distributed around the shaft at least halfway around the axis and at least one soft magnetic pole piece connected to the shaft at a second axial position, said pole piece being situated within the variable magnetic fields.

A linear motor of the type to which the invention relates is described in "Mechanical Engineering" vol. 103. No. 4, April 1981; page 57 and a more detailed description of this motor is given in EP—A—76726 filed before the filing date of the present application and published after the priority date of the present application. Such a motor is useful, for example, in Stirling cycle cryogenic coolers. In such coolers, pistons and displacers are linearly reciprocated within a cylinder. A linear motor may be used to move the piston and the displacer.

Linear motors, in general, have been known in the past. (See, e.g., U.S. Patents 3,135,880 and 4,220,899). In these and other linear motors, the shaft must be supported radially by bearings. If mechanical bearings are used, they are subject to wear and they will not maintain the shaft's radial position with a high degree of accuracy and precision. Where a linear motor is used, for example, to power a cryogenic cooler in a satellite, both of these limitations rule out the use of mechanical bearings.

Alternatively as in "Mechanical Engineering" vol. 103, No. 4, April 1981; page 57 and in EP—A—76726, active magnetic bearings can be used to radially support the shaft in a linear motor. Active magnetic bearings, are not subject to wear due to friction, are long lived, and they can be designed for high accuracy and precision. However, most active magnetic bearings rely on position sensors to drive the shaft to its centralized position. The stability of these sensors, particularly as a result of temperature variations, have been found to be particularly troublesome. This is a major problem in actually attaining a high degree of accuracy and precision in the radial position of the shaft.

Moreover, active magnetic bearings consume significant amounts of power to support large constant loads. This is of particular concern when the linear motor is to be used in a satelite, where it is desirable to minimize energy consumption.

Finally, the design of a linear motor having conventional active magnetic bearings requires a trade-off between motor efficiency and bearing efficiency. The power and efficiency of the linear motor can be increased, but only at the expense of applying an increased destabilizing force on the motor shaft. Of course, an increased destabilizing force on the shaft requires more powerful magnetic bearings in order to maintain the shaft at the desired radial position. Hence, the use of conventional magnetic bearings with linear motors requires minimization of the destabilizing force of the motor in order to ease the load on the bearing.

In contrast to conventional magnetic bearings, a virtually zero powered (VZP) magnetic bearing suspension utilizes little or no power to support constant loads. Such a bearing, used to support a shaft in its axial direction, is known from U.S. Patent 3,860,300. In an article entitled "Magnetically Suspended Momentum Wheels for Spacecraft Stabilization" by Carl H. Henrikson et al (AIAA 12th Aerospace Sciences Meeting, Washington, D.C., January 30—February 1, 1974, Paper No. 74—128) it has been suggested to provide a rotary motor with a radial VZP magnetic bearing. However, Henrikson et al warn that such a combination would not be easy to produce because rotary motors are magnetically discontinuous with rotation, whereas the suspension must be made as continuous as possible with rotation in order to reduce eddy current losses.

Summary of the invention

It is an object of the invention to provide a linear motor having a shaft whose radial position is maintained with a high degree of accuracy and precision.

It is another object of the invention to provide a linear motor having a magnetic suspension which does not require minimization of the destabilizing force of the motor in order to minimize the power consumption of the bearing.

It is yet another object of the invention to provide a linear motor having a magnetic suspension in which the magnetic suspension does not depend on position sensors, which tend to exhibit instabilities over time and as a consequence of temperature variations.

It is a further object of the invention to provide a linear motor having a magnetic suspension which consumes little or no power supporting constant loads.

A magnetically suspended linear motor according to the invention achieves these objects by utilizing a VZP magnetic suspension to radially support the longitudinally reciprocating motor shaft. The same magnetic field which is used to inpart the longitudinally reciprocating motion to the shaft and which creates the radially destabilizing force on the shaft is used to support the shaft in its radial position by way of the VZP magnetic suspension.

Now, advantageously, both the linear motor and the magnetic suspension can be otimized independently. The radially destabilizing force created by the linear motor assits, rather than loads the VZP suspension. Moreover, the magnetic suspension consumes little or no power supporting large constant loads, does not depend on position sensors to support the shaft at its desirable position, and provides a high degree of accuracy and precision for the radial position of the shaft.

The magnetically suspended linear motor according to the invention is characterized in that

the permanent magnetic field entends radially with respect to the axis (14) in a volume more than halfway around the shaft (10), and

the linear motor further comprising magnetic field interaction means (32) connected to shaft (10) or the housing (12) at locations more than halfway around the shaft, which interact with the permanent magnetic field to produce radially attractive forces between the shaft and the housing, each of said forces decreasing with increasing radial distance between the shaft (or housing) on the magnetic field interaction means, radial forces on opposite sides of the shaft being directed in opposite directions, and servo means are provided for supplying power to the variable magnetic field generating means in response to the velocity of the shaft after it is deflected by the external load, and in response to the power levels supplying the variable magnetic field generating means so as to restore the shaft to an equilibrium position at which substantially no power is supplied to the variable magnetic field generating means.

According to a preferred aspect of the invention, the housing of the magnetically suspended linear motor has a bore having a bore axis, and the shaft is mounted in the bore. In operation, in the absence of any external load, the shaft axis corresponds substantially with the magnetic center of the permanent magnetic field. Moreover, at any axial position, the permanent magnetic field is substantially uniform around the shaft axis.

Figure 1 is a longitudinal cross-sectional view of a magnetically suspended linear motor according to the invention.

Figure 2 is a cross-sectional view along line II—II of the magnetically suspended linear motor shown in Figure 1.

Figure 3 is a schematic diagram of a servo means for the magnetic suspension according to the invention.

Figure 4 is a schematic diagram showing the radial forces acting upon the shaft in a linear motor according to the invention.

Figure 5 is a longitudinal cross-sectional view of a portion of another embodiment of a magnetically suspended linear motor according to the invention.

Figure 6 is a longitudinal cross-sectional view of a portion of yet another embodiment of a magnetically suspended linear motor according to the invention.

Description of the preferred embodiments

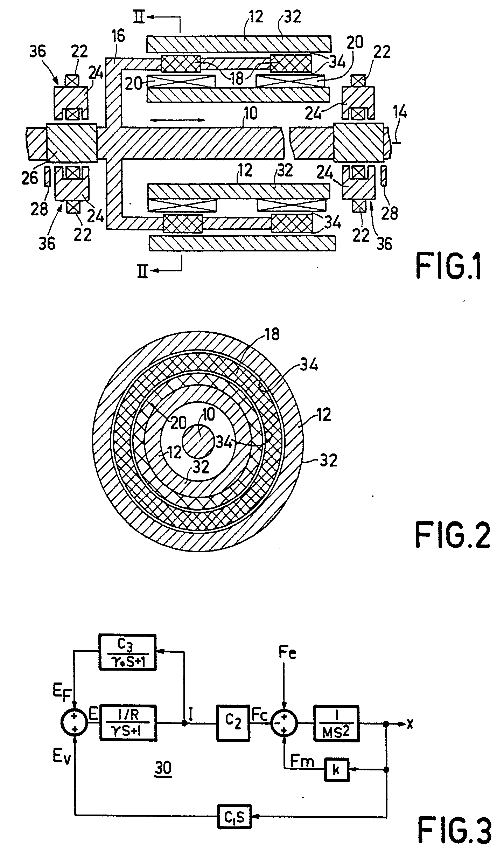

Figures 1 and 2 show a first embodiment of a magnetically suspended linear motor according to the invention. In this embodiment, the linear motor comprises a shaft 10 mounted in a housing 12. The shaft 10 has a longitudinal axis 14 along which the shaft 10 can be made to reciprocate with respect to the housing 12.

Linear reciprocating motion can be imparted to shaft 10 by way of a linear motor. For this purpose, shaft 10 is provided with one or more arms 16 rigidly attached thereto. Arm 16 is provided with permanent magnets 18 each of which generate a permanent magnetic field which extends radially with respect to longitudinal axis 14. Within each of these permanent magnetic fields, a coil 20, made of an electrical current conductor, is connected to the housing 12. Each coil 20 completely surrounds the longitudinal axis 14.

As shown more clearly in Figure 2, each part of the linear motor thusfar described is rotationally symmetric, and forms nested circular cylinders. In general, other geometrics may be utilized in linear motors, although it is preferable to use rotationally symmetric geometries.

In operation, an alternating current is supplied to each of the coils 20 of the linear motor. The alternating current may be, for example, sinusoidal. The relative phase differencies, if any, between the curernts supplied to each coil 20 depends upon the distance between the coils as compared to the distance between the permanent magnets 18.

The interactions between the currents in coils 20 and the permanent magnetic fields generated by permanent magnets 18 produce forces in the direction of the longitudinal axis 14. Each force can be defined according to the equation $F = I_L \times B$, where $I_L$ is the coil current (travelling circumferentially), B is the magnetic field generated by the permanent magnet 18 (extending radially), and F is the net force resulting between the coil 20 and the permanent magnet 18.

Clearly, the net force between the coils 20 and the permanent magnets 18 does not depend upon which is attached to the housing 12 and which is attached to the shaft 10. In fact, longitudinal reciprocating motion can be induced between shaft 10 and housing 12 by attaching permanent magnets 18 to housing 12 and by attaching coils 20 to shaft 10. In this case flexing leads (not shown) are provided in order to supply the current to coils 20.

While shaft 10 is being made to reciprocate with respect to housing 12 along longitudinal axis 14, the shaft 10 is being subjected to one or more external loads applied in direction extending radially with respect to the longitudinal axis 14. Such radially extending external loads can arise from, for example, the weight of shaft 10 (as well as the weight of anything mounted on shaft 10) when the linear motor is situated in a gravitational field. A radially-extending external load may also be generated by the interaction between permanent magnets 18 and coils 20 which may, in practice, produce radial as well as longitudinal forces. Radially-extending loads may also be produced by acceleration of the entire apparatus which comprises the linear motor.

Consequently, in order to reciprocate the shaft 10 with respect to the housing 12 along the longitudinal axis 14, and without generating unacceptably high frictional losses, the shaft 10 must be radially supported by a bearing system. According to the invention, the shaft 10 is supported by a magnetic bearing suspension which includes electromagnets 36 (electrically conducting coils 22 and soft magnetic pole pieces 24), soft magnetic pole pieces 26, position or velocity sensors 28, and servos 30 (Figure 3). Moreover, the magnetic bearings include a yoke 32, which is preferably soft magnetic but which may be permanently magnetic. In Figure 1, the yoke 32 is the portion of the housing 12 which is shown in the Figure.

The magnetic bearing used to support shaft 10 is of the virtually zero power (VZP) type. In Figure 1, the yoke 32 is connected to housing 12 completely around shaft 10. Yoke 32 interacts with the permanent magnetic field generated by permanent magnets 18 in such a way as to produce opposing radially attractive forces between the shaft and the housing. Each of the radial forces decreases with increasing radial distance between the shaft 10 and the yoke 32. This, at the "magnetic center" of the permanent magnetic field, the housing and shaft are maintained relative to one another in an unstable equilibrium.

The magnitude of the radial instability force described above depends upon several factors. It depends upon the strength of the permanent magnetic field generated by magnets 18, and it depends on the thicknesses of air gaps 34 between magnets 18 and coils 20 or yoke 32. By minimizing the thickness of air gaps 34 "fringing" instability and "reluctance" instability can be increased. In VZP-type magnetic bearing, the higher the radial instability, the stiffer the bearing.

If the permanent magnets 18 are attached to housing 12 (instead of being attached to shaft 10), then one or more yokes 32 are provided on arm 16 of shaft 10 in such a way as to generate the required radial instability force between shaft 10 and housing 12.

With the provision of the radial instability force, in the absence of any external load the shaft 10 can be placed at an unstable equilibrium position at the "magnetic center" of the instability field. In order to stabilize the shaft 10, a system of active electromagnets 36 is provided. In Figure 1, four electromagnets 36, each comprising a coil 22 and a soft magnetic pole piece 24 are shown. Four additional electromagnets (not shown) are also used in this embodiment, oriented at positions radially extending from the shaft 10 along lines perpendicular to the plane of the drawing. All of these electromagnets interact with soft magentic pole pieces 26 provided at either end of shaft 10.

The electromagnets 36 are powered by servos 30. In the embodiment shown in Figure 1, there is a servo 30 provided for each pair of electromagnets located radially opposite one another with respect to shaft 10. Each servo 30 provides power to coils 22 in response to the radial velocity of the shaft 10 (at the location of the respective electromagnets) and in response to the power levels supplying the pair of coils 22.

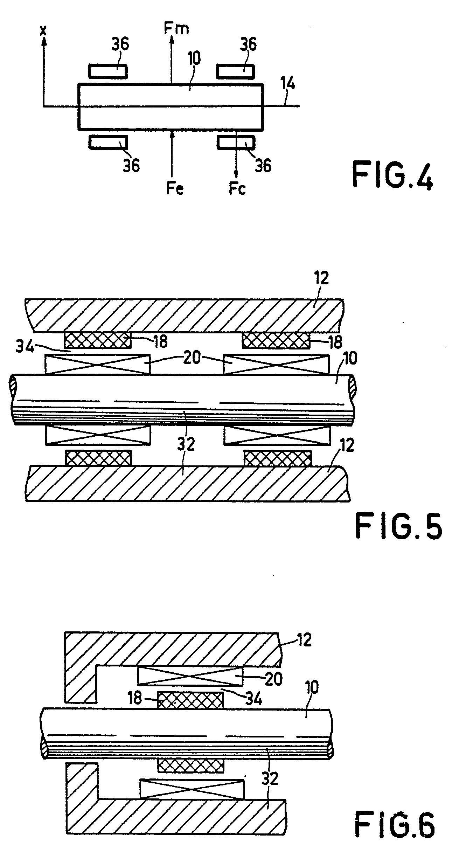

The operation of the control system servo 30, for the magnetic bearings can be understood by referring to Figures 3 and 4. Figure 3 shows a block diagram of the control system and Figure 4 shows a schematic diagram of the forces on shaft 10. Given an initial position and velocity of the right end of shaft 10 pictured in Figure 4, this end of the shaft is subject to, for example, an external force ($F_e$) in the upward direction, a force ($F_m$) also in the upward direction due to the radial instability field, and a force ($F_c$) in the downward direction due to force coils 22 in electromagnets 36. The directions of the forces shown in Figure 4 merely indicate the positive direction of each force. Of course, it is possible for each type of force to be directed in a direction opposite that which is shown in the Figure (and each of $F_e$ and $F_n$ can have a component perpendicular to the plane of the drawing, for which additional electromagnets are provided).

Referring now to Figure 3, the net force on the end of shaft 10 is shown as the sum of $F_e+F_m-F_c$. Travelling clockwise round the control loop from this starting position, the radial position, X, of the end of shaft 10 is derived from the net force thereon (as the double integral of the net force divided by the effective mass). To a first approximation, the force $F_m$ is a linear function of the displacement X of the end of the shaft from the magnetic center (unstable equilibrium) position.

Next, the velocity of the end of shaft 10 can be obtained by either measuring the position of the shaft and then differentiating the position with respect to time (as shown), or by directly measuring the velocity of the shaft. Either method produces the velocity error signal, $E_v$.

The velocity error signal, $E_v$, and the force coil current error signal, $E_F$, are summed to produce the total error signal, E, for the control system. This total error signal is then amplified to power both force coils 36 on opposite sides of the end of shaft 10. In any given situation, the sign of the total error signal, E, determines which one of the electromagnets 36 will be energized. The current through the electromagnets 36 is also fed back to produce the force coil current error signal, $E_F$.

The symbols used in Figure 3 are defined in Table 1, below.

4

| TABLE 1 | | |
|---|---|---|
| $F_m$ | — | instability force on shaft due to permanent magnetic field |
| $F_e$ | — | external load on shaft |
| $F_c$ | — | net force on shaft due to electromagnets (force due to bottom electromagnet minus force due to top electromagnet) |
| X | — | radial position of shaft with respect to magnetic center (measured at the axial position of the electromagnets) |
| k | — | force constant of permanent magnetic field |
| M | — | effective mass of shaft at the axial position of the electromagnets |
| I | — | net current through electromagnets (current through bottom electromagnet minus current through top electromagnet) |
| s | — | Laplace operator |
| R | — | effective resistance of force coils |
| L | — | effective inductance of electromagnet force coils |
| $\tau$ | — | effective time constant (L/R) of electromagnet force coils |
| $\tau_c$ | — | integrator time constant |
| $c_1$ | — | velocity transducer gain |
| $c_2$ | — | electromagnet force coils gain electromagnet force coils feedback gain |
| $E_v$ | — | velocity error signal |
| $E_F$ | — | force coil current error signal |
| E | — | total error signal |

In operation, upon displacement of the shaft 10 from its equilibrium position, both the velocity error signal and the force coil current error signal additively combine to energize the electromagnets in such a way as to generate a force to oppose the action of the shaft away from the equilibrium position. For example, if shaft 10 is deflected upward, $E_F$ and $E_v$ combine to produce a total error signal, E, which is greater than either component separately. The total error signal, E, has a positive sign, therefore the bottom electromagnet (Figure 4) is energized.

After the velocity of the shaft is reduced to zero, and the shaft begins to return to the equilibrium position, the sign of the force coil current error signal, $E_F$, remains the same, while the sign of the velocity error signal, $E_v$, reverses. This reduces the total error signal and enables the shaft to be brought back to its equilibrium position gradually, in order to reduce or eliminate overshooting.

With a constant external load, the shaft is brought to an equilibrium position where the radial instability field exactly balances the external load. Hence, a steady-state load can be supported drawing only little or no current through the electromagnet force coils. This control system also has the peculiar effect of moving the equilibrium position of the shaft in a direction opposite the direction of the external load.

Figure 5 shows another embodiment of the invention in which the reference numerals designate the same parts designated in Figures 1 and 2. In this embodiment, permanent magnets 18 are attached to housing 12 and coils 20 are attached to shaft 10. Moreover, the shaft 10 is not provided with arms 16 in this embodiment.

The operation of the magnetically suspended linear motor shown in Figure 5 is the same as explained with respect to Figure 1. Because coils 20 are now mounted on shaft 10, yoke 32 now includes parts of the shaft 10 and parts of the housing 12, as shown, in order to produce a complete circuit for the magnetic flux generated by permanent magnets 18.

A further embodiment of the invention is shown in Figure 6. In this embodiment, the shaft is provided with only one permanent magnet 18, and the housing 12 is provided with only one coil 20. The portions of shaft 10 and housing 12 which are shown in Figure 6 also comprise yoke 32, forming a circuit for the magnetic flux. The geometry of the configuration shown in Figure 6 would be expected to produce a very high radial instability force, which would be useful for high-stiffness VZP magnetic bearings in a linear motor.

In all of the embodiments shown, it is preferable that the permanent magnets 18 be in the form of radially magnetized rings. Such rings may be produced, for example, by cutting pie-shaped permanent magnet segments and then forming them into the shape of a ring. The strengths of the magnets should be reasonably uniform so that the magnetic center is near the physical center of the ring.

In all embodiments of the invention, sensors 28 may be position sensors, for example eddy current position sensors. While these sensors tend to slowly drift over time and with variations in temperatures, this problem can be overcome by differentiating the output of the sensors to produce signals proportional to the velocity of the shaft.

Alternatively, a small coil of wire can be placed in the air gap of pole piece 24 in order to sense the velocity of shaft 10 directly. As shaft 10 changes its radial position, the flux level in the air gap changes. A

## 0 098 002

voltage will be induced in the coil in proportion to the rate of change of flux, which in turn is proportional to the velocity of shaft 10.

**Claims**

1. A magnetically suspended linear motor comprising:
a housing (12);
a shaft (10) having a longitudinal axis (14), said shaft (10) mounted in the housing (12) for longitudinal reciprocating motion along the axis (14), said shaft (10) being subjected to at least one external load applied in a direction extending radially with respect to the axis (14);
means (18), connected to the housing (12) or the shaft (10), for generating a permanent magnetic field which extends radially with respect to the axis (14) at a first axial position;
means (20), connected to the shaft (10) or the housing (12), for conducting an electric current in a path surrounding the axis (14), said path being situated within the permanent magnetic field;
at least one set (36) of three separate means, connected to the housing (12), for generating variable magnetic fields, said means being distributed around the shaft (10) at least halfway around the axis; and
at least one soft magnetic pole piece (26) connected to the shaft (10) at a second axial position, said pole piece being situated within the variable magnetic fields; characterized in that:
the permanent magentic field entends radially with respect to the axis (14) in a volume more than halfway around the shaft (10), and
the linear motor further comprising magnetic field interaction means (32) connected to the shaft (10) or the housing (12) at locations more than halfway around the shaft, which interact with the permanent magnetic field to produce radially attractive forces between the shaft and the housing, each of said forces decreasing with increasing radial distance between the shaft (or housing) and the magnetic field interaction means, radial forces on opposite sides of the shaft being directed in opposite direction, and
the linear motor comprises servo means (30) for supplying power to the variable magnetic field generating means (36) in response to the velocity of the shaft (10) after it is deflected by the external load and in response to the power levels supplying the variable magnetic field generating means (36) so as to restore the shaft (10) to an equilibrium position at which substantially no power is supplied to the variable magnetic field generating means (36).

2. A magnetically suspended linear motor as claimed in Claim 1, characterized in that:
the shaft (10) is mounted in the bore of the housing (12); and in operation, in the absence of any external load, the shaft axis (14) corresponds substantially with the magnetic center of the permanent magentic field.

3. A magnetically suspended linear motor as claimed in Claim 2, characterized in that in operation, in the absence of any external load, at any axial position the permanent magnetic field is substantially uniform around the shaft axis.

**Patentansprüche**

1. Linearer Magnetschwebemotor mit:
einem Gehäuse (12);
einer Welle (10) mit einer Längsachse (14), wobei diese Welle (10) zwecks einer sich in der Längsrichtung erstreckenden hin- und hergehenden Bewegung längs der Achse (14) in dem Gehäuse angeordnet ist und wobei die genannte Welle (10) wenigstens einer äusseren Belastung ausgesetzt ist, die in einer Richtung ausgeübt wird, die sich in bezug auf die Achse (14) in radialer Richtung erstreckt:
Mitteln (18), die mit dem Gehäuse (12) oder mit der Welle (10) verbunden sind und zwar zum Erzeguen eines Dauermagnetfeldes, das sich radial zu der Achse (14) in einer ersten axialen Lage erstreckt;
Mitteln (20), die mit der Welle (10) oder dem Gehäuse (12) verbunden sind und zwar zum Führen eines elektrischen Stromes über eine Strecke um die Achse (14) herum, wobei diese Strecke innerhalb des Dauermagnetfeldes liegt;
wenigstens einem Satz (36) dreier einzelner Mittel, die mit dem Gehäuse (12) verbunden sind und zwar zum Erzeugen veränderlicher Magnetfelder, wobei diese Mittel um die Welle (10) verteilt sind und zwar wenigstens halbwegs um die Achse und
wenigstens einem weichmagnetischen Polschuh (26), der mit der Welle (10) verbunden ist in der zweiten axialen Lage, wobei dieser Polschuh innerhalb des veränderlichen Magnetfeldes liegt, dadurch gekennzeichnet, dass
das Dauermagnetfeld sich radial in bezug auf die Achse (14) erstreckt und zwar bis über die Hälfte der Welle (10), und
der Linearmotor weiterhin Magnetfeldwechselwirkungsmittel (32) aufweist, die mit der Welle (10) oder dem Gehäuse (12) verbunden sind und zwar an Stellen, die über die Hälfte der Welle liegen, wobei diese Mittel mit dem Dauermagnetfeld eine Wechselwirkung haben und zwar zum Erzeugen radial anziehender Kräfte zwischen der Welle und dem Gehäuse, wobei jede dieser Kräfte bei radial zunehmendem Abstand zwichen der Welle (oder dem Gehäuse) und den Magnetfeldwechselwirkungsmitteln abnimmt, wobei

6

radiale Kräfte an einander gegenüberliegenden Seiten der Welle in entgegengesetzten Richtungen wirken und

der Linearmotor Servomittel (30) aufweist zum Liefern von Kraft zu den Erzeugungsmitteln (36) für ein veränderliches Magnetfeld und zwar in Reaktion auf die Geschwindigkeit der Welle (10) nachdem diese durch die äussere Belastung abgelenkt worden ist oder in Reaktion auf die Speisepegel, welche die Erzeugungsmittel (36) für veränderliche Magnetfelder speisen um die Welle (10) in eine Gleichgewichtslage zurückzubringen, in der den Erzeugungsmittels (36) für veränderliche Magnetfelder im wesentlichen keine Leistung zugeführt wird.

2. Linearer Magnetschwebemotor nach Anspruch 1, dadurch gekennzeichnet, dass die Welle (10) in der Bohrung des Gehäuses (12) angeordnet ist; und im Betrieb, wenn keine äussere Belastung vorhanden ist, die Wellenachse (14) im wesentlichen der magnetischen Mitte des Dauermagnetfeldes entspricht.

3. Linearer Magnetschwebemotor nach Anspruch 2, dadurch gekennzeichnet, dass im Betrieb, wenn keine äussere Belastung vorhanden ist, in jeder axialen Lage das Dauermagnetfeld im wesentlichen einheitlich um die Wellenachse vorhanden ist.

## Revendications

1. Moteur linéaire à suspension magnétique comportant:
un boîtier (12);
un arbre (10) présentant un axe longitudinal (14), ledit arbre (10) étant monte dans le boîtier (12) pour un mouvement de va-et-vient longitudinal le long de l'axe (14), ledit arbre (10) étant soumis à au moins une charge externe appliquée dans une direction s'étendant radialement par rapport à l'axe (14);
des moyens (18) reliés au boîtier (12) ou à l'arbre (10) pour la formation d'un champ magnétique permanent qui s'étend radialement par rapport à l'axe (14) dans une première position axiale;
des moyens (20) reliés à l'arbre (10) ou au boîtier (12) pour la conduction d'un courant électrique selon un trajet entourant l'axe (14), ledit trajet étant situé dans un champ magnétique permanent;
au moins un jeu (36) de trois moyens séparés connectés au boîtier (12) pour la formation de champs magnétiques variables, lesdits moyens étant répartis autour de l'arbre (10) à mi-chemin autour de l'axe et
au moins une pièce polaire magnétique douce (26) reliée à l'arbre (10) dans une deuxième position axiale, laidte piéce polaire étant située dans les champs magnétiques variables, caractérisé en ce que le champ magnétique permanent s'étend radialement par rapport à l'axe (14) dans un volume s'étendant sur plus qu'à mi-chemin autour de l'arbre (10) et
le moteur linéaire comporte en outre des moyens d'interaction de champ magnétique (32) reliée à l'arbre (10) ou au boîtier (12) à des endroits situés sur plus qu'à michemin autour de l'arbre et agissant réciproquement avec le champ magnétique permanent pour réaliser des forces d'attraction radiales entre l'arbre et le boîtier, chacune desdites forces diminuant avec la distance radiale croissante entre l'arbre (ou le boîtier) sur les moyens d'interaction de champ magnétique, des forces radiales étant dirigées des deux côtés de l'arbre dans des sens opposés et
le moteur linéaire comporte des servo-moyens (30) pour amener de la puissance aux moyens de formation de champ magnétique variables (36) en réponse à la vitesse de l'arbre (10) après qu'il est dévie par la charge externe et en réponse aux niveaux de puissance provoquant l'alimentation des moyens de formation de champ magnétique variables (36) afin de ramener l'arbre (10) dans une position d'équilibre dans laquelle pratiquement pas de puissance est amenée aux moyens de formation de champ magnétique variables (36).

2. Moteur linéaire à suspension magnétique selon la revendication 1, caractérisé en ce que l'arbre (10) est monté dans l'alésage du boîtier (12) et lors du fonctionnement, en l'absence de toute charge externe, l'axe de l'arbre (14) correspond pratiquement au centre magnétique de champ magnétique permanent.

3. Moteur linéaire à suspension magnétique selon la revendication 2, caractérisé en ce que lors du fonctionnement, en l'absence de toute charge externe, dans toute position axiale, le champ magnétique permanent est pratiquement uniforme autour de l'axe de l'arbre.

FIG.1

FIG.2

FIG.3

FIG.4

FIG.5

FIG.6